(19) Europäisches Patentamt

European Patent Office

Office européen des brevets

(11) EP 0 800 014 B1

(12) EUROPEAN PATENT SPECIFICATION

(45) Date of publication and mention
of the grant of the patent:
**17.07.2002 Bulletin 2002/29**

(51) Int Cl.⁷: **F16D 51/24**, F16D 65/56

(21) Application number: **97105428.3**

(22) Date of filing: **01.04.1997**

(54) **Drum type brake device**

Trommelbremse

Frein à tambour

(84) Designated Contracting States:
**DE FR GB**

(30) Priority: **03.04.1996 JP 10631096**

(43) Date of publication of application:
**08.10.1997 Bulletin 1997/41**

(73) Proprietor: **NISSHINBO INDUSTRIES, INC.**
**Chuo-ku, Tokyo 103 (JP)**

(72) Inventors:
• **Asai, Seiji**
**Okazaki-shi, Aichi 444 (JP)**

• **Kobayashi, Yasushi, Nisshinbo Ind. Inc. Nagoya**
**Nagoya-shi, Aichi 457 (JP)**

(74) Representative: **Sajda, Wolf E., Dipl.-Phys. et al**
**MEISSNER, BOLTE & PARTNER**
**Postfach 86 06 24**
**81633 München (DE)**

(56) References cited:
**AU-A- 5 349 179**          **US-A- 3 709 334**
**US-A- 5 275 260**

**Description**

The present invention relates to the braking mechanism of a drum brake device of the type commonly used for motor vehicles. This type of drum brake device is disclosed in the Australian patent AU-B1-53 491/79.

A pair of brake shoes **b**, **c** are arranged on a back plate **a**. The respective adjacent lower ends of each brake shoe engages an anchor block **d**, while two coil springs **e**, **f** urge the adjacent ends in the direction toward the anchor block **d**. A hydraulic cylinder **g** is disposed between and engages the upper ends of the respective brake shoes **b**, **c** for applying hydraulic pressure. A return spring **h** provides a force urging the two brake shoes in the direction toward one another.

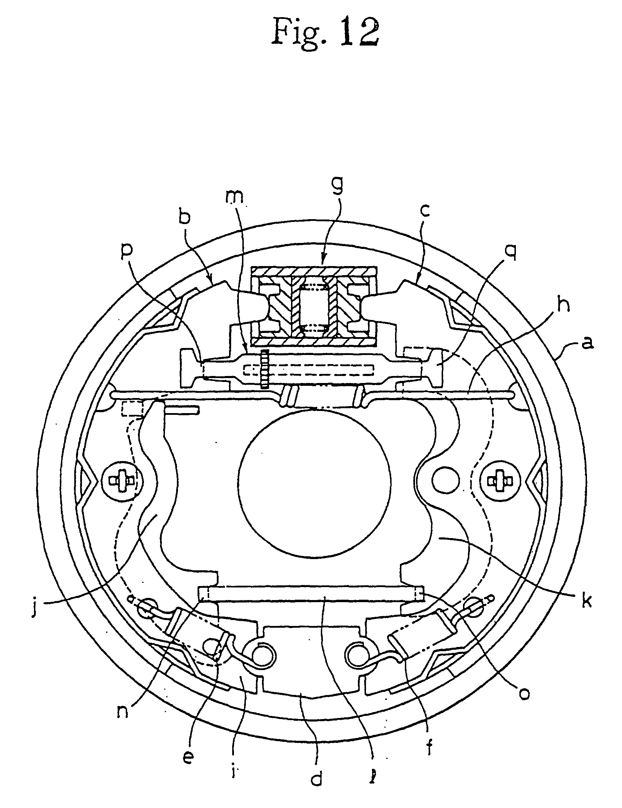

The prior art of Fig. 12 also includes a parking lever **j** pivoted at one end **i** of the brake shoe **b**. When pivoted in the clockwise direction, the level **j** urges the first connector rod **l** into engagement with the idler lever **k**. The idler lever **k** is mounted to pivot on the brake shoe **c**. A second connector rod **m** engages the other end of the idler lever **k**, the second connector rod **m** also engaging with the brake shoe **b**.

In the known device of Fig. 12, the anchor block **d** is fixed such that no movement of the lower ends of the brake shoes is possible. This braking system is referred to in the field as a leading-trailing (LT) brake. With respect to the parking brake, actuation of the parking lever **j** is transmitted from one braking shoe to the other in an interactive manner. The braking function of the parking brake is referred to as a duo-servo (DS) operation.

The device of the type described above has the following points that need to be improved. When the parking brake is applied, the two brake shoes at both the upper and lower ends move apart. The upper ends can move away from the hydraulic cylinder, while the lower ends move away from the anchor block. If the parking brake is applied when the wheels are in slight rotation, the brake drum will lock with the spread apart brake shoes and the entire mechanism will rotate in tandem until one or the other brake shoe contacts the anchor block. This will have the effect that one of the brake shoes will collide against the anchor block producing a noise, which is disconcerting to the driver. In addition, since the impact load of the brake shoe against the anchor block may diminish the structural strength of the components, the strong but heavier materials are used in the prior art.

Furthermore, the adjacent ends of the brake shoes of the prior art, when the brake lever is not set in its return position precisely, will be separated from the anchor block, even if the vehicle is not in motion. Therefore, the brake shoes may slightly but undesirably move in the drum upon the operation of the vehicle. This movement may cause unusual dragging between the lining and the brake drum and/or may have the brake shoe to bite the brake drum causing the wheel to be locked.

Another undesirable effect is the play generated when pressure is applied to the service brake by the driver actuating the cylinder. The upper adjacent ends of the brake shoes move apart and at the same time the idler lever for the parking brake moves away from its upper connector rod. This generates play between the idler lever and the connector rod, which can vibrate when the vehicle is in motion and create a disturbing noise. This noise can also be disconcerting to the driver of the motor vehicle.

It is therefore an object of the present invention to provide a drum brake device which will avoid the above-mentioned drawbacks. Particularly, it is an object of the present invention to provide a stable leading-trailing type service brake combined with a highly effective duo-servo type parking brake, in which no disconcerting noises are generated, in which no undesirable impact loads are applied to the brake components, thus also enabling a lighter device, and in which the drum brake prevents unusual dragging occurring between the lining and the brake drum and/or prevents the brake shoe biting the brake drum causing the wheel to be locked.

US 5,275,260 also discloses the dual mode drum brake device which functions as a leading-trailing (LT) brake when the service brake is applied and functions as a duo-servo (DS) brake when the parking brake is applied. This brake has components being much the same as above-described AU-B1-53 491/79. There, when the parking brake is applied after the service brake being applied, the lower ends of the brake shoes do not move away from the anchor block. However, if the parking brake only is applied, the lower ends of the brake shoes move away from the anchor block before the brake drum rotates.

US 3,709,334 discloses another type of dual mode drum brake device. There, when the parking brake is applied, the upper ends of the brake shoes are expanded rather firstly, but the lower ends of the brake shoes are expanded outwardly before the brake drum rotates. In accordance with the present invention, a drum brake device is provided as defined in Claim 1. According to the invention, a first shoe return spring is mounted to urge the second adjacent ends of the brake shoes toward one another, wherein the urging force is greater than the force urging the upper first adjacent ends of the brake shoes toward one another. With this arrangement, the force holding the brake shoes in engagement with the anchor block is larger than the force holding the other adjacent ends of the shoes to the hydraulic cylinder. The arrangement has the advantage that the ends of the shoes are held in engagement with the anchor block, thereby avoiding impact with the block. In addition, the biasing toward the anchor block biases the idler arm of the parking brake mechanism such that play is less likely to arise between the second connector and the end of the idler lever. This avoids the generation of noise which could be caused by vibration.

Further objects and advantages of the present invention will become apparent with the following description of preferred embodiments taken in conjunction with the drawings, in which

Fig. 1      is a plan view of a brake drum device according to one embodiment of the invention;

Fig. 2      is a cross-sectional view of the embodiment of Fig. 1 taken along the line II-II;

Fig. 3      is a cross-sectional view of the embodiment of Fig. 1 taken along the line III-III;

Fig. 4      is a cross-sectional view of the embodiment of Fig. 1 taken along the line IV-IV;

Fig. 5      is a cross-sectional view of the embodiment of Fig. 1 taken along the line V-V;

Fig. 6      illustrates a modified arrangement of the pivotal mounting of the idler lever to the brake shoe;

Fig. 7      is a plan view of a brake drum device according to another embodiment of the present invention;

Fig. 8      is a cross-sectional view of the embodiment of Fig. 1 taken along the line VIII-VIII;

Fig. 9      is a plan view of a brake drum device according to a further embodiment of the present invention;

Fig. 10      is a cross-sectional view of the embodiment of Fig. 9 taken along the line X-X;

Fig. 11      is a cross-sectional view of the embodiment of Fig. 9 taken along the line XI-XI;

Fig. 12      is a plan view of a conventional drum brake device.

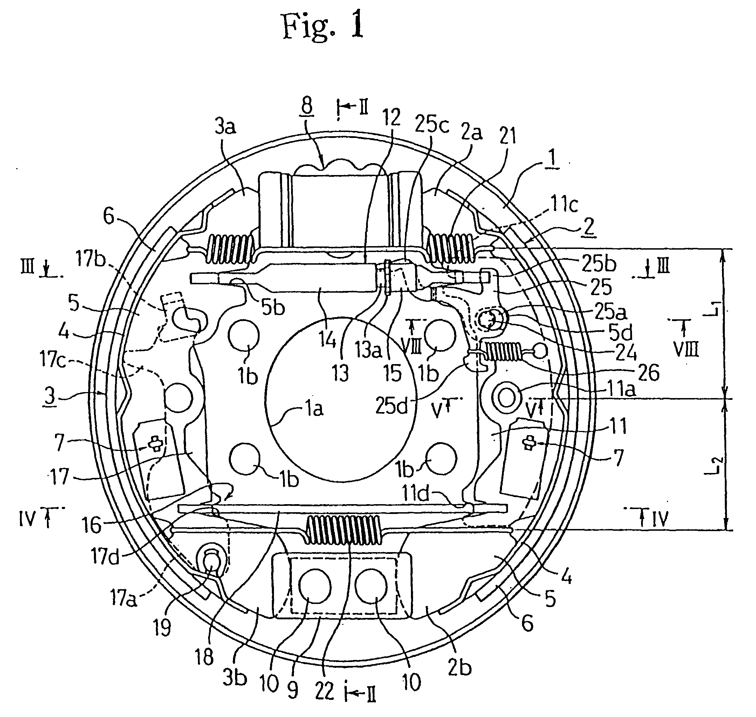

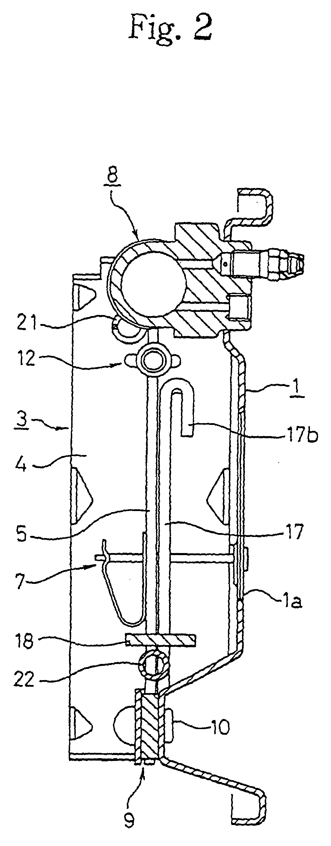

A first embodiment of the present invention will be explained in conjunction with Figs. 1 to 6. Fig. 1 illustrates a back plate 1 having a central hole 1a freely mountable on a vehicle axle. The back plate 1 is secured to a stationary part of the vehicle by four bolts inserted through the bolt holes 1b. Two brake shoes 2, 3 are disposed opposite one another, each configured as a shoe rim 4 and a shoe web 5 joined to form a T in cross-section. A lining 6 is affixed around the outer surface of each shoe rim 4. Braking force is created by urging the linings against a brake drum (not shown in the figure). Each brake shoe is mounted on the back plate 1 by a holding mechanism 7 as shown in Fig. 2, which includes a plate spring and pin as is known per se.

A service brake actuator 8 is disposed between a first pair of adjacent ends 2a, 3a of the brake shoes. The actuator 8 is secured to the back plate 1 with bolts or other securement means. The service brake actuator 8 comprises a hydraulic wheel cylinder known in the art, however which may also be an air wheel cylinder.

The anchor block 9 is disposed between the second pair of adjacent ends 2b, 3b of the brake shoes 2, 3. The anchor block 9 is secured to a raised portion of the back plate 1 by rivets 10 as shown in Fig. 2. The anchor block 9 can alternatively be welded to the back plate 1. Moreover, an anchor pin can be used in place of the rectangular plate shown in Figs. 1 and 2. In either case, the anchor must be adapted to support and engage each of the second adjacent ends 2b, 3b of the brake shoes 2, 3.

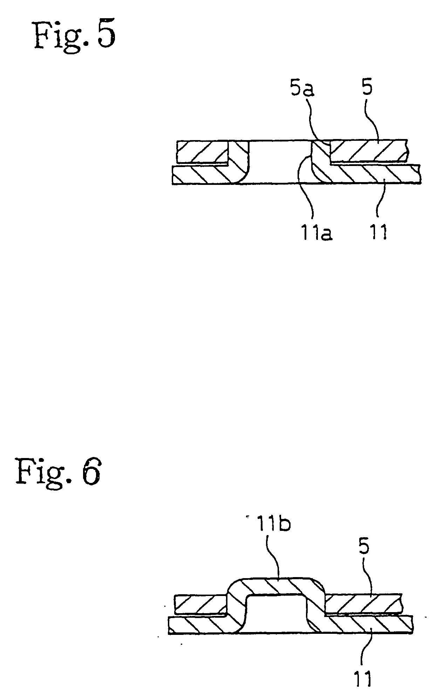

An elongated idler link 11 is pivotally mounted to the shoe web 5 of the first brake shoe 2 in an overlapping manner as seen in Fig. 1. As seen in Fig. 5, the idler link 11 comprises a protuberance 11a which is formed as burrs with a press. The protuberance or burr 11a is formed in a central region of the link 11 and passes into a hole 5a provided in the shoe web 5. The arrangement provides a pivotal connection. Fig. 5 illustrates the configuration of the protuberance 11a, while Fig. 6 shows an alternative means for the pivotal mounting employing a protuberance 11b formed by drawing with a press. Alternatively, a separate pin can be used for the pivotal mounting of the idler link 11.

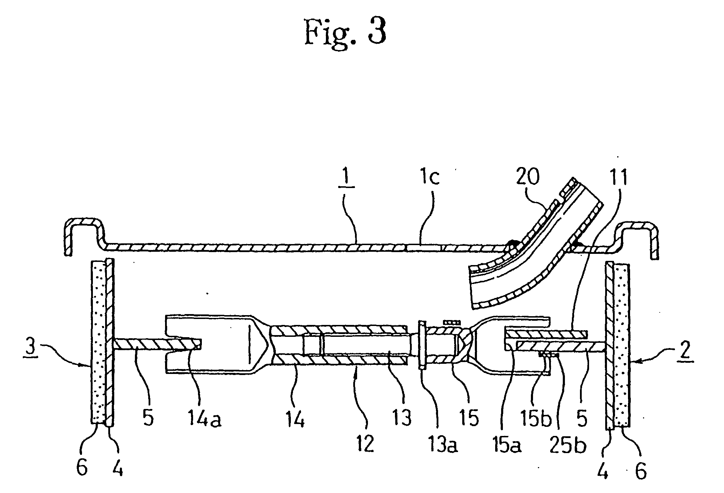

A shoe clearance adjustment device 12 allows adjustment of the clearance of the brake drum (not shown) and the lining 6 of the respective brake shoes 2, 3. The adjustment device shown in Figs. 1 and 3 can allow an automatic clearance adjustment, to be described later. For manual adjustment, a screwdriver can be inserted into a hole 1c provided in the back plate 1 or in the brake drum. By this means, the toothed adjustment wheel 13a shown in Figs. 1 and 3 can be turned. The wheel 13a is integrally molded with the bolt 13. By rotation of the adjustment wheel 13a into or out of the tube portion 14, the length of the adjustment device 12 can be set.

As best seen in Fig. 3, a socket 15 supports one end of the bolt 13. Either end of the adjustment device is provided with a plate extending in the direction of the respective brake shoe 2, 3. Each of the plates is provided with a notched groove 14a, 15a. The bottom section of the notched groove 14a engages a cooperating notch groove 5b molded into the shoe web 5 of the second brake shoe 3. The bottom of the notched groove 15a engages with a cooperating notched groove 11c disposed on the end of the idler link 11 as seen in Figs. 1 and 3.

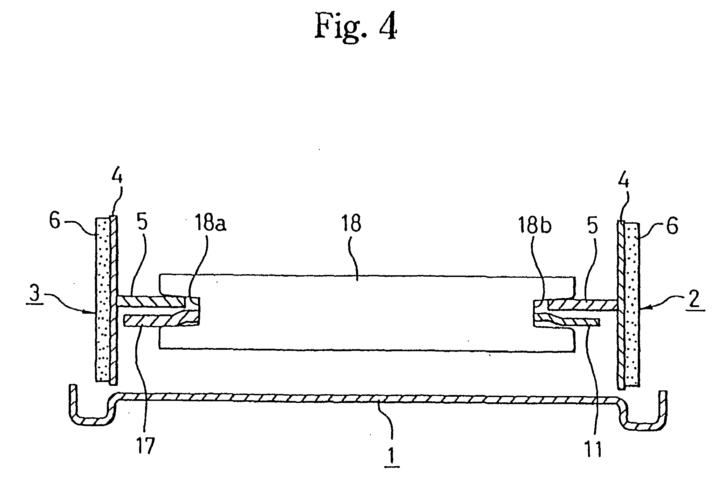

The parking brake actuator 16 comprises a forward-pull brake lever 17, the strut 18 and other components shown in Figs. 1 and 4. When the parking brake is applied by the vehicle driver, the brake lever 17 is pulled forward, i.e. moved in the clockwise direction as seen in Fig. 1. The brake lever 17 is disposed substantially parallel and overlapping with the shoe web 5 of the second brake shoe 3. Its base end 17a is pivotally mounted via a pin 19 at the lower end 3b of the brake shoe 3. A remote control cable (not shown) is connected to a U-shaped groove at the free end 17b of the brake lever 17. A stopper 17c abuts against the inner face of the shoe rim 4 and regulates the return position of the brake lever 17 when the parking brake is not engaged. The brake lever 17 when applied, engages a strut 18 having notched grooves 18a, 18b provided on either end as shown in Fig. 4. The bottom of the notched groove 18a engages with the bottom of the notched groove 17d of the brake lever 17. Similarly, the bottom of the notched groove 18b engages the bottom of the notched groove 11d provided on the end of the idler link 11.

As shown in Fig. 3, a tubular member 20 serves as an outer casing for guiding the remote cable for attachment to the parking brake lever 17. The tubular member 20 is secured to the back plate 1 in this embodiment.

As shown in Fig. 1, an upper return spring 21 is provided adjacent to the service brake actuator 8, which is stretched apart when the actuator 8 forces the brake shoes outwardly. The return spring 21 is attached to the first adjacent ends 2a, 3a of the brake shoes 2, 3. In this embodiment, a lower return spring 22 is provided adjacent to the anchor block 9, which is tensioned between the second pair of adjacent ends 2b, 3b of the brake shoes 2, 3. The mounted loads of the return springs 21, 22 are set such that the second adjacent ends 2b, 3b of the brake shoes are held in engagement with the anchor block 9, i.e. do not spread apart. More particularly, the torque from the force of the lower return spring 22 and the distance from the pivot mount of the brake shoe with the link to the lower return spring 22, is greater than the torque from the force of the upper return spring 21 at the distance from the pivotal mount to the upper return spring 21.

The desired return force can also be expressed using a further parameter of the brake drum system, namely the distance L1 and L2 of the upper return spring 21 and the lower return spring 22 from the pivot point 11a on the first brake shoe 2 as shown in Fig. 1. The return action of the springs is then expressed in terms of torque about the pivot point by the following relationship:

$$F1 \times L1 < F2 \times L2,$$

wherein,

F1    mounted load of the upper return spring 21;
F2    mounted load of the lower return spring 22;
L1    distance from the pivot point of brake shoe 2 with link 11 to the upper return spring 21;
L2    distance from the pivot point of brake shoe 2 with link 11 to the lower return spring 22.

The operation of the brake device according to this embodiment will now be discussed. When the driver depresses the brake pedal (not shown), the service brake actuator 8 is pressurized forcing the first adjacent ends 2a, 3a of the brake shoes 2, 3 to spread apart. The second adjacent ends 2b, 3b of the brake shoes engage with the anchor block 9 as a fulcrum during this movement. The movement forces the linings 6 of the brake shoes against the interior surface of the rotating brake drum (not shown), whereby the created friction produces the braking force on the wheels of the vehicle.

Next the operation of the parking brake is explained in conjunction with the embodiment shown in Fig. 1. For example, when the hand brake lever is applied, the free end 17b of the brake lever 17 is caused to move to the right in Fig. 1 by means of the control cable (not shown). The brake lever 17 turns clockwise about the pivot pin 19 mounted to the end 17a. With the clockwise movement, the lever 17 engages the strut 18 and forces it to the right in the figure. The strut 18 engages the notched groove 11d of the idler link 11, which produces counter-clockwise movement of the link 11 about its pivotal mounting at the protuberance 11a. The counter-clockwise movement of the link 11 transmits a force to the notched groove 5b of the second brake shoe 3 via the shoe clearance adjustment device 12. The transmitted force causes the first end 3a of the second brake shoe 3 to spread open, thereby pressing the lining 6 against the brake drum. The second end 3b of the second brake shoe 3 acts as a fulcrum, being engaged with the anchor block 9.

Moreover, when the hand brake lever is applied, the idler link 11 turns in counter-clockwise direction about the notched groove 11c engaging the right end of the clearance adjustment device 12 as seen in Fig. 1. The action of the force tending to cause counter-clockwise rotation of the link 11 is transferred to the hole 5a in the first brake shoe 2 by means of the protuberance 11a. As mentioned above, the torque (F2 x L2) is larger than the torque (F1 x L1). Thus the force transferred to the hole 5a causes the first brake shoe 2 to open at its upper first end 2a, while its second end 2b acts as the fulcrum, being engaged with the anchor block 9. In this manner, the upper portion of the first brake shoe 2 forces the lining 6 against the brake drum. As is apparent, the two brake shoes 2, 3 do not separate from the anchor block 9 until the brake drum rotates when either the service brake or the parking brake is applied. The effect is the same when both brakes are applied simultaneously. Consequently, the second respective ends 2b, 3b of the brake shoes 2, 3 do not collide with the anchor block 9 to generate noise. In addition, no substantial impact load arises against the anchor block.

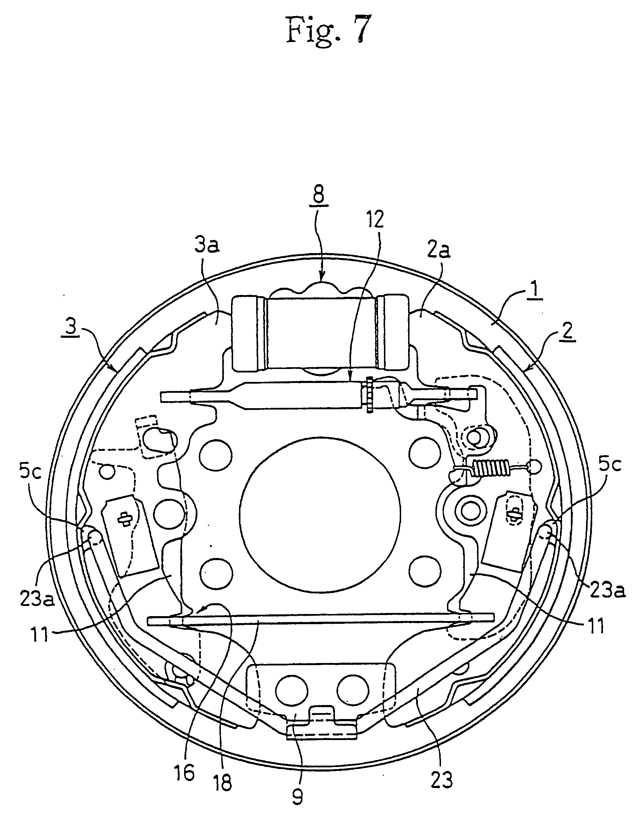

Turning to a second embodiment, Fig. 7 shows a modified drum brake device, where similar or the same components of Fig. 1 are identified with the same reference numerals. The return springs 21, 22, are replaced by only one fairly thick wire spring 23 formed in the shape of a slightly obtuse U. A central portion of the wire spring 23 is secured to the anchor block 9, while the two free ends 23a engage with the two brake shoes 2, 3 respectively. The ends 23a are bent so as to firmly latch into holes 5c bored in both of the brake shoes 2, 3. The holes 5c define the point. of application of the return force applied by the U-shaped wire spring 23.

This point lies offset from the central region of the respective brake shoes in the direction toward the anchor plate 9. This point of application of return force is important for the braking action caused when the parking brake is applied. Namely, with this arrangement of the wire spring 23, the first ends 2a, 3a of the brake shoes 2, 3 will open when the parking brake is applied. As in the first embodiment, the second ends 2b, 3b of the brake shoes are urged to maintain contact with the anchor block 9.

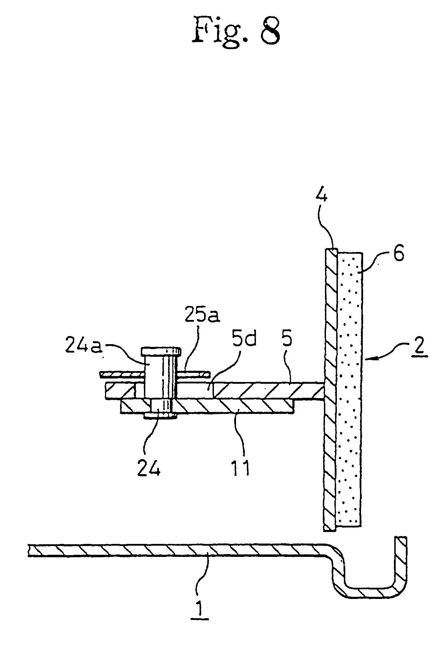

In a further embodiment, the drum brake device of the present invention is provided with an automatic, clearance adjustment function. This function can be employed in any of the embodiments discussed above, particularly the embodiment of Figs. 1 and 7. As shown in Fig. 8, an adjustment lever 25 is pivotally mounted to the idler link 11 by means of a pin 24. Furthermore, a stem component 24a extends through an elongate hole 5d bored in the shoe web 5 of the first brake shoe 2. The adjustment lever 25 lies above the shoe web 5 as seen in Fig. 1 and also has a hole 25a for pivotal engagement with the stem component 24a of the pin 24. As seen in Fig. 1, an arm 25b of the adjustment lever 25 abuts against the stepped face 15b of the notch groove 15a at the end of the clearance adjustment device 12 (Fig. 3). The other arm 25c of the adjustment lever 25 is disposed to engage with the toothed adjustment wheel 13a of the adjustment bolt 13. In an alternative arrangement, the pin 24 can be secured to the shoe web 5 instead of the idler link 11 whereby the adjustment lever still pivots about the stem component 24a.

As also seen in Fig. 1, an adjustment spring 26 is mounted between a third arm 25d of the adjustment lever 25 and the shoe web 5. The spring 26 urges the adjustment lever 25 to rotate in the counter-clockwise direction as seen in Fig. 1 about the pin 24.

The operation of the automatic clearance adjustment will now be explained. When the service brake is applied and the two brake shoes 2, 3 open to the outside, the shoe clearance adjustment device 12 trails the second brake shoe 3. On the other hand, the idler link 11 would trail the first brake shoe 2, however the link 11 receives the force of the adjustment spring 26, which turns it clockwise as shown in Fig. 1 about the pivot member 11a. As a result the adjustment lever 25 is turned counter-clockwise by an amount equal to the sum of the rotation of the pin 24 and the angle with respect to the pin 24 defined by the movement of the clearance adjustment device 12.

As the linings 6 of the brake shoes 2, 3 become thinner due to wear, the degree of rotation of the arm 25c will exceed the inner tooth pitch of the toothed adjustment wheel 13a. When this occurs, the bolt 13 will be rotated by the arm 25c to be screwed out of the sleeve 14 as seen in Fig. 3. This mechanism automatically adjusts the gap between the brake drum and the linings 6 to maintain a substantially constant clearance.

When the parking brake is applied, the clearance adjustment device 12, the idler link 11 and the adjustment lever 25 all trail together with the second brake shoe 3 by the amount it is open. However, the pin 24 is freely movable in the elongate hole 5d of the first brake shoe 2, such that no effect on the adjust lever 25 results. The automatic adjustment action will not be less than the movement of the adjustment lever 25 when the service brake is applied.

In this embodiment, the force of the adjustment spring 26 always acts to tension the idler link 11, even when the service brake is applied so that the link 11 will not vibrate. The advantages of the present automatic adjustment can also be realized in the embodiment with one return spring as indicated in Fig. 7.

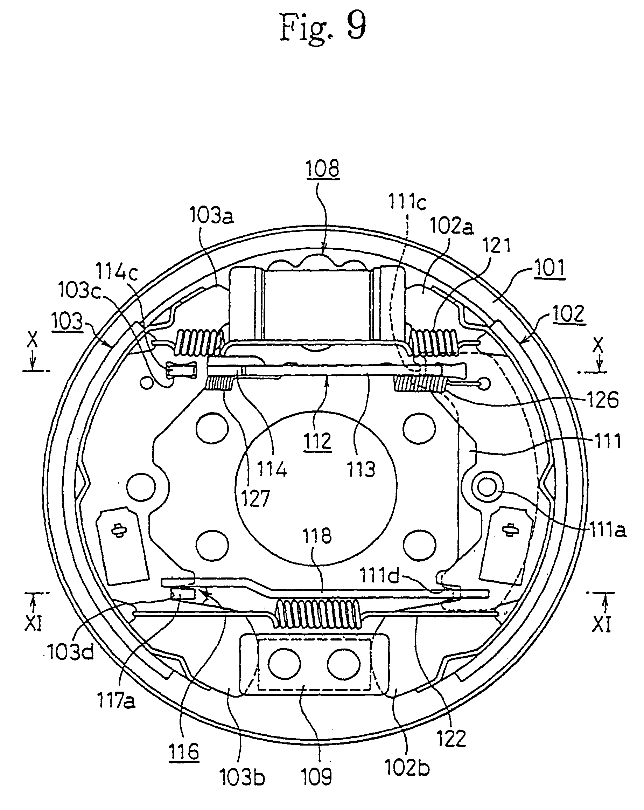

A further embodiment of the present drum brake device will now be discussed in conjunction with Figs. 9 to 11. The same components having the same function as in the previous embodiments are identified with like reference numerals in the 100-series. This embodiment is equipped with a one-shot type automatic clearance adjustment device and a cross-pull type mechanism for the parking brake. As seen in Fig. 9, the brake device comprises a back plate 101, two brake shoes 102, 103 with a first pair of adjacent ends 102a, 103a and a second pair of adjacent ends 102b, 103b. Further included are an actuator 108, an anchor block 109, an idler link 111 with a pivot member 111a, a notched groove 111c and a notched groove 111d at either end of the link 111, an upper return spring 121 and a lower return spring 122. The return force of the lower return spring 122 in its mounted state is such that when the parking brake is applied, the second ends 102b, 103b of the brake shoes do not pull away from the anchor plate 109. As with the first embodiment of Fig. 1, the mounted load of the lower return spring 122 is selected such that when the parking brake is applied, the other ends 102b, 103b of the brake shoes 102, 103 do not spread open.

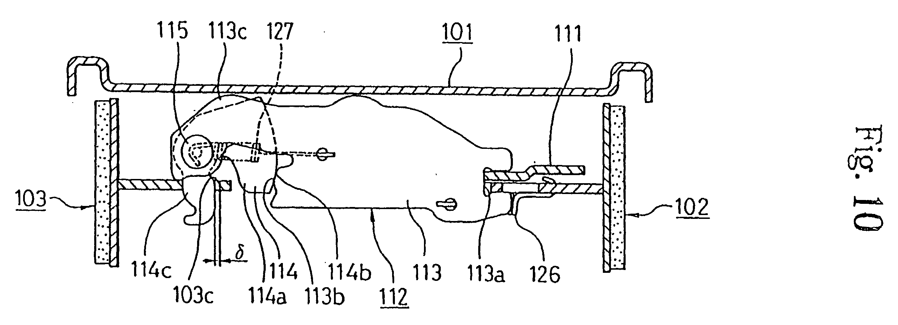

The clearance adjustment device 112, best seen in Fig. 10, comprises a plate portion 113, a bell crank lever 114, as well as two spring members 126, 127. The bottom of the notched groove 113a formed at one end of the plate member 113 engages with the bottom of the notched groove 111c at the end of the idler link 111 as seen in Fig. 10. A toothed portion 113b is formed at a central section of the plate member 113.

The middle segment of the bell crank lever 114 is supported by the stem of a pin 115 so as to pivot on the other end 113c of the strut 113 and to move lengthwise along the plate face of the strut 113 as shown in Fig. 10. A fan-shaped arm 114a of the bell crank lever 114 has a toothed portion 114b formed in its outer perimeter, which meshes with the toothed portion 113b of the plate member 113. Another arm 114c of the crank lever 114 is provided with a cam surface having a clearance $\delta$ within a rectangular hole 103 formed in the second brake shoe 103 as shown in Fig. 10.

The adjustment spring 126 is disposed between the first brake shoe 102 and the plate member 113, while the second spring 127 is disposed between the plate member 113 and the pin 115.

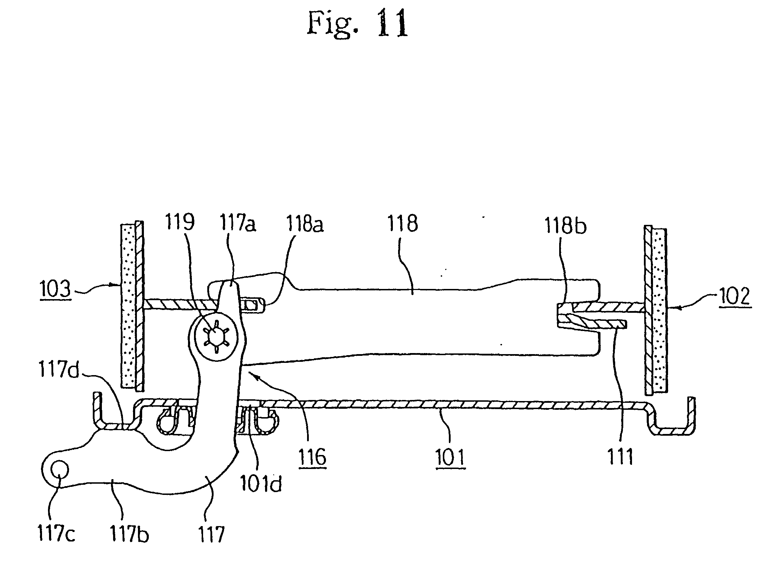

Referring to Fig. 11, a cross-pull actuator 116, activated by the parking brake, comprises the brake lever 117 and the strut 118. A finger-shaped portion 117a of the brake lever 117 engages against the bottom of the notched groove 103d formed on the second end of the second brake shoe 103. The arm 117b on the other end of the brake lever 117 penetrates freely through a hole 101d formed in the back plate 101. A mounting hole 117c is provided for connecting the remote control cable (not shown), the hole being bored on an end of the arm 117b. A stop 117d is also formed on the brake lever 117, which abuts against the reverse side of the back plate 101 to regulate the return stop position of the lever.

The strut 118 has a notched groove 118a as shown in Fig. 11, in which the second end of the second brake shoe 103 passes. The brake lever 117 is also pivotable about a pin 119 as shown in Fig. 11. Another notch groove 118b is formed at the other end of the strut 118, the bottom of which engages the bottom of the notch groove 111d at one end of the idler link 111.

The operation of this embodiment will now be explained. The main difference from the embodiment of Fig. 1 is that the brake lever 117 is now of the cross-pull type. When the brake lever 117 is pulled by the remote control cable, the brake lever 117 is urged against the strut 118 by means of the pin 119, which is also pivotally mounted to the strut. The generated force is transmitted in sequence to the idler link 111, the clearance adjustment device 112 and finally to the rectangular hole 103 of the second brake shoe 103 as seen in Fig. 9. The first end 103a of the second brake shoe 103 opens, while the other second end 103b rests against the anchor block 109. The movement causes engagement of the lining of the second brake shoe with the brake drum.

At the same time, the generated force applied to the idler link 111 urges the first brake shoe 102 outwardly due to the engagement of the link 111 with the plate member 113. This causes the first end 102a of the first brake shoe 102 to move outwardly, whereby the second end 102b is engaged with the anchor block 109.

From the above it is apparent that the movement of the two brake shoes 102 and 103 is the same as that for the previous embodiment, whereby the same technical effect is achieved.

Again referring to Fig. 9, when the service brake is applied, the two brake shoes 102, 103 are urged outwardly. The clearance adjustment device 112 experiences the greater return force of the adjustment spring 126 and therefore follows the first brake shoe 102. As the linings 6 become worn down, the amount by which the shoes have opened eventually exceeds a value represented by the sum of the clearance $\delta$ of the bell crank lever 114 (Fig. 10) and the height of the toothed portion 114b. The bell crank lever 114 then turns in the counter clockwise direction as shown in Fig. 10 by an amount equivalent to one tooth pitch on the toothed portions 113b and 114b. In this manner, the clearance for the brake shoes is set automatically.

When the parking brake is applied, the plate member 113 and the bell crank lever 114 move together with the second brake shoe 103 to the left as seen in Fig. 9. The adjustment spring 126 extends to move the first brake shoe 102 to the right, whereby there is no effect on the automatic adjustment mechanism.

The return force of the first adjustment spring 126 constantly acts on the idler link 111, hence the link 111 does not vibrate and cause noise. When the service brake is applied, an energizing force of the adjustment spring 126 is produced by it being stretched, while when the parking brake is applied, the spring 126 exerts a holding force.

The present invention has been explained by the above description of embodiments, however is not limited thereto. For example, an incremental type automatic clearance adjustment device as shown in Fig. 1 can be combined with the cross-pull type parking brake. In addition, the one-shot type as discussed in conjunction with Fig. 9 can be combined with the forward-pull type of parking brake shown in Fig. 1. Other modifications include superimposing the idler link 11 on that side of the shoe web 5 on which the brake drum is mounted.

The drum brake device of the present invention ensures that the brake shoes do not separate from the anchor block even when the parking brake is applied. Consequently, no noise is generated and the discomfort or anxiety of the driver is eliminated. This applies as well when a torque is generated on the brake shoes by the brake drum. Moreover, the undesirable impact of the brake shoes against the anchor plate can be avoided, which allows the material strength of the components to be lessened, making the device on the whole lighter.

The adjacent ends will not be separated from the anchor block even in the situation that the brake lever is not set in its return position precisely, thereby preventing unusual dragging occurring between the lining and the drum brake and/or preventing the brake shoe biting the drum causing the wheel to be locked.

The elimination of impact load also increases the long-term reliability of the drum brake device of the present invention.

The ends of the brake shoes on the anchor block side can be prevented from opening solely and easily by a proper setting of the mounting force of the shoe return springs and their positions.

In addition, when the idler link is tensioned by an adjustment spring, the possibility of vibration and noise generation is eliminated. This applies to the situation where no braking action is applied or when the service brake is applied.

## Claims

1. A drum brake device comprising:

   first and second brake shoes (2, 3) disposed opposite to one another on a back plate (1) ;

   a service brake actuator (8) disposed between a first pair of adjacent ends (2a, 3a) of said brake shoes (2, 3),

   an anchor block (9) disposed between a second pair of adjacent ends (2b, 3b) of said brake shoes (2, 3),

   an idler link (11) pivotally mounted at a central region of said first brake shoe (2),

   a shoe clearance adjustment device (12) arranged adjacent to said service brake actuator (8) and disposed between said second brake shoe (3) and one end of said idler link (11),

   parking brake actuator means (16, 18) disposed between said second brake shoe (3) and the other end of said idler link (11), and

   at least one shoe return spring (22) mounted to urge said brake shoes (2, 3) toward one another,

   **characterized in that**
   the force urging the second adjacent ends (2b, 3b) of the brake shoes (2, 3) toward one another is greater than the force urging the first adjacent ends (2a, 3a) of the brake shoes (2, 3) toward one another, whereby the second adjacent ends (2b, 3b) of the brake shoes (2, 3) are held in engagement with the anchor block until the brake drum rotates during the parking brake operation.

2. The brake device of Claim 1, wherein a first shoe return spring (22) urges the second adjacent ends (2b, 3b) of the brake shoes (2, 3) toward one another and a second shoe return spring (21) urges the first adjacent ends (2a, 3a) of the brake shoes (2, 3) toward one another.

3. The brake device of Claim 2, wherein the torque applied to said second adjacent ends (2b, 3b) of said brake shoes (2, 3) which is determined by the force of said first shoe return spring (22) acting at the distance from said pivotal mount (11a) of said brake shoe (2) to the first shoe return spring (22), is greater than the torque applied to said first adjacent ends (2a, 3a) of said brake shoes (2, 3) which is determined by the force of said second shoe return spring (21) acting at the distance from said pivotal mount (11a) of said brake shoe (2) to said second shoe return spring (21).

4. The brake device of any one of the Claims 1 to 3, wherein said shoe clearance adjustment device (12) can be adjusted manually from the exterior of the brake device, through a hole (1c) in said back plate (1).

5. The brake device of any one of the Claims 1 to 3, wherein said shoe clearance adjustment device (12) senses the amount by which the said pair of brake shoes (2, 3) has opened and automatically adjusts the clearance between the brake shoes (2, 3) and the brake drum.

6. The brake device of any one of the Claims 1 to 3, wherein a protuberance (11b) is integrally molded by a press onto the middle portion of said idler link (11) and said protuberance (11b) is pivotable in a hole (5a) bored in said first brake shoe (2).

## Patentansprüche

1. Trommelbremseneinrichtung, die folgendes aufweist:

   - einen ersten und einen zweiten Bremsschuh (2, 3), die einander gegenüberliegend an einer Montageplatte (1) angeordnet sind;
   - einen Betriebsbremsenbetätiger (8), der zwischen einem ersten Paar von benachbarten Enden (2a, 3a) der Bremsschuhe (2, 3) angeordnet ist,
   - einen Ankerblock (9), der zwischen einem zweiten Paar von benachbarten Enden (2b, 3b) der Bremsschuhe (2, 3) angeordnet ist,
   - ein Zwischenglied (11), das an einem zentralen Bereich des ersten Bremsschuhs (2) schwenkbar angebracht ist,
   - eine Schuhzwischenraum-Einstelleinrichtung (12), die dem Betriebsbremsenbetätiger (8) benachbart angeordnet und zwischen dem ersten Bremsschuh (3) und dem einen Ende des Zwischenglieds (11) vorgesehen ist,
   - eine Feststellbremsen-Betätigungseinrichtung (16, 18), die zwischen dem zweiten Bremsschuh (3) und dem anderen Ende des Zwischenglieds (11) vorgesehen ist, und

- mindestens eine Schuhrückstellfeder (22), die so angebracht ist, daß sie die Bremsschuhe (2, 3) aufeinander zu drängt,

**dadurch gekennzeichnet,**
**daß** die Kraft, die die zweiten benachbarten Enden (2b, 3b) der Bremsschuhe (2, 3) aufeinander zu drängt, größer ist als die Kraft, die die ersten benachbarten Enden (2a, 3a) der Bremsschuhe (2, 3) aufeinander zu drängt, so daß dadurch die zweiten benachbarten Enden (2b, 3b) der Bremsschuhe (2, 3) in Eingriff mit dem Ankerblock gehalten werden, bis sich die Bremstrommel während des Feststellbremsenbetriebs dreht.

2. Bremseinrichtung nach Anspruch 1,
wobei eine erste Schuhrückstellfeder (22) die zweiten benachbarten Enden (2b, 3b) der Bremsschuhe (2, 3) aufeinander zu drängt und eine zweite Schuhrückstellfeder (21) die ersten benachbarten Enden (2a, 3a) der Bremsschuhe (2, 3) aufeinander zu drängt.

3. Bremseinrichtung nach Anspruch 2,
wobei die auf die zweiten benachbarten Enden (2b, 3b) der Bremsschuhe (2, 3) aufgebrachte Drehkraft, die von der Kraft der ersten Schuhrückstellfeder (22) bestimmt ist, die in dem Abstand von der schwenkbaren Anbringeinheit (11a) des Bremsschuhs (2) auf die erste Schuhrückstellfeder (22) wirkt, größer ist als die auf die ersten benachbarten Enden (2a, 3a) der Bremsschuhe (2, 3) aufgebrachte Drehkraft, die von der Kraft der zweiten Schuhrückstellfeder (21) bestimmt ist, die in dem Abstand von der schwenkbaren Anbringeinheit (11a) des Bremsschuhs (2) auf die zweite Schuhrückstellfeder (21) wirkt.

4. Bremseinrichtung nach einem der Ansprüche 1 bis 3,
wobei die Schuhzwischenraum-Einstelleinrichtung (12) manuell von der Außenseite der Bremseinrichtung durch ein Loch (1c) in der Montageplatte (1) einstellbar ist.

5. Bremseinrichtung nach einem der Ansprüche 1 bis 3,
wobei die Schuhzwischenraum-Einstelleinrichtung (12) den Wert abtastet, um den sich das Paar von Bremsschuhen (2, 3) geöffnet hat, und den Zwischenraum zwischen den Bremsen (2, 3) und der Bremstrommel automatisch einstellt.

6. Bremseinrichtung nach einem der Ansprüche 1 bis 3,
wobei ein Vorsprung (11b) von einer Presse an dem Mittelbereich des Zwischenglieds (11) integral geformt ist und der Vorsprung (11b) in einem Loch (5a), das in den ersten Bremsschuh (2) gebohrt ist, drehbar ist.

**Revendications**

1. Dispositif de frein à tambour comprenant :

un premier et deuxième segments (2, 3) de freins, placés l'un en face de l'autre sur un support (1) ;
un dispositif d'actionnement (8) de frein de service placé entre une première paire d'extrémités adjacentes (2a, 3a) desdits segments (2, 3) de freins ;
un bloc d'ancrage (9) placé entre une deuxième paire d'extrémités adjacentes (2b, 3b) desdits segments (2, 3) de freins ;
une liaison de renvoi (11) montée en vue de son pivotement sur une partie centrale dudit premier segment (2) de frein ;
un dispositif (12) de rattrapage de jeu des segments placé de manière adjacente audit dispositif d'actionnement (8) du frein de service et disposé entre ledit deuxième segment (3) de frein et une extrémité de ladite liaison de renvoi (11) ;
des moyens d'actionnement (16, 18) du frein de stationnement placés entre ledit deuxième segment (3) de frein et l'autre extrémité de ladite liaison de renvoi (11) ; et
au moins un ressort de rappel (22) de segment installé pour pousser lesdits segments (2, 3) de freins l'un contre l'autre,

**caractérisé en ce que**
la force qui pousse les deuxièmes extrémités adjacentes (2b, 3b) des segments (2, 3) de freins l'une vers l'autre est supérieure à la force qui pousse les premières extrémités adjacentes (2a, 3a) des segments (2, 3) de freins l'une vers l'autre, les deuxièmes extrémités adjacentes (2b, 3b) des segments (2, 3) de freins étant ainsi maintenues en prise avec le bloc d'ancrage jusqu'à ce que le tambour de frein tourne lorsque le frein de stationnement est utilisé.

2. Dispositif de frein selon la revendication 1, dans lequel un premier ressort de rappel (22) de segment pousse les deuxièmes extrémités adjacentes (2b, 3b) des segments (2, 3) de freins l'une vers l'autre, et un deuxième ressort de rappel (21) de segment pousse les premières extrémités adjacentes (2a, 3a) des segments (2, 3) de freins l'une vers l'autre.

3. Dispositif de freinage selon la revendication 2, dans lequel le couple appliqué auxdites deuxièmes extrémités adjacentes (2b, 3b) desdits segments (2, 3) de freins, lequel est déterminé par la force dudit premier ressort de rappel (22) de segment agissant sur une distance allant dudit pivot (11a) dudit segment (2) de frein au premier ressort de rappel (22) de segment, est supérieur au couple appliqué auxdites premières extrémités adjacentes (2a, 3a) desdits segments (2, 3) de freins, lequel est déterminé par la force dudit deuxième ressort de rappel (21) du segment agissant sur une distance allant dudit pivot (11a) dudit segment (2) de frein audit deuxième ressort de rappel (21) du segment.

4. Dispositif de frein selon l'une quelconque des revendications 1 à 3, dans lequel ledit dispositif (12) de rattrapage de jeu des segments peut être réglé manuellement de l'extérieur du dispositif de frein, à travers un trou (1c) dans ledit support (1).

5. Dispositif de frein selon l'une quelconque des revendications 1 à 3, dans lequel ledit dispositif (12) de rattrapage de jeu des segments détecte la valeur d'ouverture de ladite paire de segments (2, 3) de freins et ajuste automatiquement l'espace entre les segments (2, 3) de freins et le tambour de frein.

6. Dispositif de frein selon l'une quelconque des revendications 1 à 3, dans lequel une protubérance (11b) est moulée à l'aide d'une presse, de manière solidaire, sur la partie du milieu de ladite liaison de renvoi (11) et ladite protubérance (11b) est susceptible de pivoter dans un trou (5a) percé dans ledit premier segment (2) de frein.

Fig. 1

# Fig. 2

# Fig. 3

EP 0 800 014 B1

EP 0 800 014 B1

Fig. 4

13

Fig. 5

Fig. 6

# Fig. 7

# Fig. 8

# Fig. 9

# Fig. 10

Fig. 11

# Fig. 12